# EUROPEAN PATENT SPECIFICATION

(11) **EP 1 041 045 B1**
(45) Date of publication and mention of the grant of the patent: **04.01.2006**
(21) Application number: 99830207.9
(22) Date of filing: 09.04.1999
(51) Int. Cl.: C03B 23/03, C03B 27/044, C03B 23/025

(54) **Device for positioning a vitreous sheet in correspondence of a moulding station in plants for glass panel manufacturing and manufacturing plant thereof**
Vorrichtung zur Positionierung von Glasscheiben in einer Biegestation in Anlagen zur Herstellung von Glasplatten und Herstellungsanlage dafür
Appareil de positionnement de feuilles en verre en relation d'une station de formage dans des usines de fabrication de paneaux en verre et usine pour former lesdits paneaux

(30) Priority: 30.03.1999 IT MI990648
(43) Date of publication of application: 04.10.2000
(73) Proprietor: TECHINT COMPAGNIA TECNICA INTERNAZIONALE S.p.A., 20149 Milano (IT)
(72) Inventor: Daneu, Alessandro, Romano di Lombardia (Bergamo) (IT); Mazzolari, Massimo, Ripelta Cremasca (Cremona) (IT)
(74) Representative: Tansini, Elio Fabrizio

(56) References cited:
- EP-A- 0 030 340
- EP-A- 0 719 736
- FR-A- 1 538 691

## Description

The present invention relates to a device for positioning a vitreous sheet at a moulding station provided in plants for glass panel manufacturing, and to the relevant manufacturing plant.

In particular the positioning device can be used in plants intended for manufacturing windows, windscreens and rear windows for motor-vehicles and also for manufacturing glass sheets or panels for shower stalls, doors, windows, etc.

It is known that plants for manufacturing vitreous sheets and in particular for production of windows, windscreens and rear windows for motor-vehicles are provided with a furnace in which the suitable material intended for forming the panel is kept at a temperature of about 650-750°C in order to obtain a vitreous mass having the viscous properties adapted to enable subsequent working.

It is known from EP 0719736 a conveyor roll device for preliminarily binding glass sheets.

In this device a glass sheet (pre-heated nearly to a softening point) is preliminarily bent by a conveyor roll device while being fed along a feed path to a bending press. The conveyor roll device has a succession of first straight rolls spaced along the feed path for supporting a central region of the glass sheet, and a succession of second straight rolls spaced along the feed path for supporting a marginal edge portion of the glass sheet. The second straight rolls are vertically tilted with respect to the first straight rolls. The first and second straight rolls alternate with each other along the feed path.

In this known deice, the glass sheet lies on a vertically movable ring mold extending around a lower die; during operation, such a ring mold is actively lifted towards other components of the machinery and therefore a non-zero acceleration is imparted on the vitreous mass of the sheet.

Glass, on its coming out of the furnace, is transferred to a corresponding moulding station by means of power-driven rollers and therein correctly positioned for the subsequent pressing operation.

If glass panels of big sizes are to be made, before the sheet comes out of the furnace a frame element is to be positioned at the moulding station.

In detail, a support structure movable relative to the machine framework moves the frame element in a manner adapted to place it under the forming male die at such a position that it does not interfere either with the rollers or with the carried sheet.

Once the glass sheet from the furnace reaches the intended position, it is lain down on the frame element by the rollers and is ready to be moulded. At this working point, rollers are moved downwardly from their position and simultaneously the male die comes down towards the sheet carried by the frame element to give it the desired shape.

When the sheet has been moulded, the die is moved away and the movable support structure carrying the frame element moves the sheet towards a tempering station. At this station the sheet is submitted to a thermal treatment (air tempering), which will bring about increasing of its mechanical features and strength.

Then, the same movable support structure carries out removal of the tempered sheet and transfer of same to a cooling station where glass is brought to lower temperatures than in the moulding and tempering stations. Essentially, the sheet cooling process aims at avoiding softening phenomena in the product in that the same, although externally cooled, if it is of big sizes and thickness, is internally still rather hot.

At this working point the sheet is unloaded from the roller-bed at a final station.

It is to note that in this type of known plants the glass sheet is advanced from the furnace until the unloading station along the same horizontal direction thus meeting the moulding station, tempering station, pulling-out or drawing station and cooling station in succession.

If glasses of smaller sizes, such as for side windows for example, are wished to be made by use of the same plant, a different positioning device of the trolley type is to be arranged at the moulding station.

First of all, use of the movable support is not provided; in fact, since the latter is mounted to, and supported by the plant framework, it cannot be dissociated from the machine and therefore it is always mounted thereon (but it cannot be used as it is fixed) during the manufacturing procedure for accomplishment of this second glass typology.

This further positioning device, in addition to being provided with power-driven rollers for sheet advancing, is also equipped with a frame defined by interrupted lengths, which frame can be moved between a first position in which it is under the power-driven rollers and a second position in which it is over the same.

In particular, once the sheet coming out of the furnace reaches the intended position by means of the rollers, the interrupted frame is moved until it matches the outer perimeter of the glass and carries the latter against the surface of the forming male die.

At the end of the operation the interrupted frame causes the moulded sheet to slowly move down onto the rollers allowing said rollers to carry the sheet to the tempering station and then to the subsequent stations.

While plants of known type can be submitted to appropriate modifications enabling them to manufacture panels both of big and small sizes, they however have several serious drawbacks.

First of all it is to note that for manufacturing glasses of big sizes the presence of a movable structure is always required for moving a frame from the moulding station to the tempering station, from the latter to the cooling station and ultimately to the drawing station and the unloading station. The movable structure not only greatly increases the machinery weight but it also remarkably increases bulkiness and involves an important decrease in the production rate.

In addition, it is to point out that the movable structure moves glasses of big sizes that are at least partly still in a plastic state for carrying them from the moulding station to the tempering station and that during-this transportation step the vitreous panel could be deformed in an uncontrollable manner.

In fact, the translation motion imposed by the frame and the material weight can give rise to stresses in the glass and, as a result, to undesired deformations on the product.

In addition, the plant appears to have an important longitudinal size in which the cooling and drawing stations are greatly spaced apart from the tempering station, due to the presence of the movable structure. During manufacturing of flat glasses of big thickness conventional plants do not allow a sufficient heat control of the sheet over a long portion thereof. Sheets of big thickness (that are more than 8-9 mm thick) are likely to be subjected to deformations due to softening of the material which for example can become undulated to such a degree that the obtained panel becomes useless and is therefore to be discarded.

It is also to point out that for accomplishment of windows or rear windows of small sizes, the movable structure is not used and therefore is inactive.

It is also apparent that for passing from production of glasses of big sizes to production of glasses of small sizes replacement of the trolley is to be carried out and in addition power-driven rollers need to be previously mounted also at the region of the tempering station, which operations are not simple and involve resetting of the whole plant.

Therefore the present invention aims at substantially solving all the above mentioned drawbacks.

It is a fundamental object of the present invention to provide a single plant capable of operation both for manufacturing glasses of small sizes and bulkiness, and for manufacturing rear windows, windscreens and flat sheets of any thickness but of an important bulkiness. It is a further object of the invention to enable both moulding operations and pulling-out or drawing operations to take place at the same positioning device of the trolley type.

It is a further fundamental object of the invention to be able to avoid use of a movable support structure carrying the continuous frame for moving the panel between the different working stations as well as to eliminate the presence of the pulling-out or drawing device generally present downstream of the cooling station, so that the plant is less complicated from a structural point of view and the production rate thereof is increased.

It is finally an auxiliary object of the invention to make the production plant structurally more compact so that a better heat control can be carried out on the glasses being worked during the production cycle.

The foregoing and further objects that will become more apparent in the course of the present description are substantially achieved by a device as defined in claim 1 for positioning a vitreous sheet at a moulding station provided in plants for glass panel manufacturing in accordance with that which is described in the appended claims. The plant including the claimed positioning device is defined in claim 11.

Further features and advantages will be best understood from the detailed description of a preferred but non exclusive embodiment of a positioning device in accordance with the present invention.

This description will be taken hereinafter with reference to the accompanying drawings, given by way of nonlimiting example, in which:
- Fig. 1 is a diagrammatic view of a plant embodying a positioning device in accordance with the present invention;
- Fig. 2 is a diagrammatic top view of the positioning device shown in Fig. 1;
- Fig. 3 is a section taken along axis III-III in Fig. 2 of the positioning device in its first operating condition;
- Fig. 4 shows a corresponding section of the positioning device in Fig. 2 in its second operating condition;
- Fig. 5 is a diagrammatic view of an alternative embodiment of the plant in Fig. 1 incorporating two tempering stations;

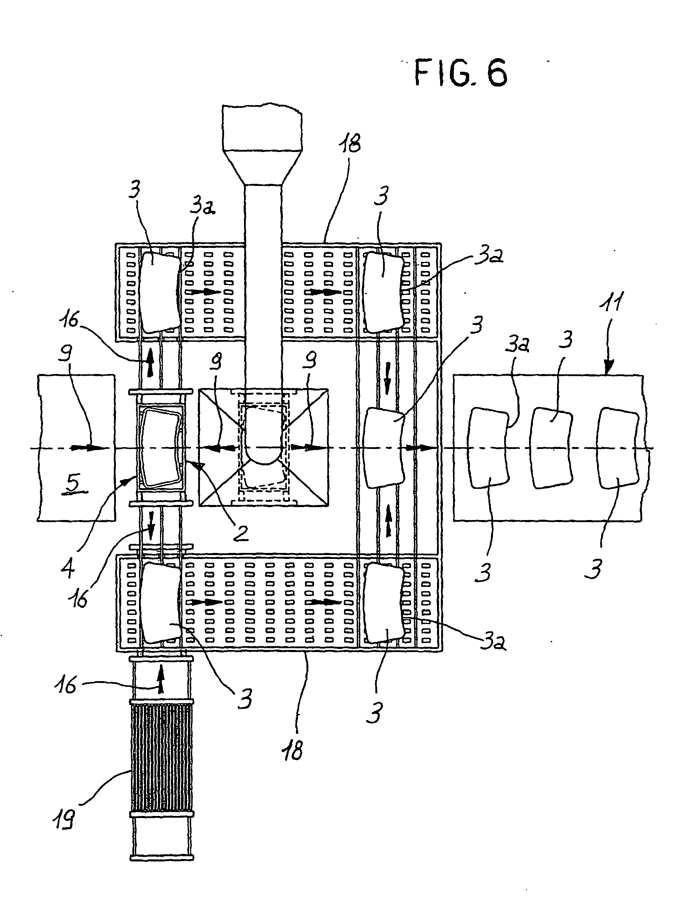

- Fig. 6 is a diagrammatic view of another alternative embodiment of the plant in Fig. 1 incorporating two cooling stations.

With reference to the drawings, a plant for manufacturing glass panels incorporating a device 2 for positioning a vitreous sheet 3 at a moulding station 4 has been generally denoted by 1.

The plant is provided with a furnace 5 intended for heating to a temperature between 650 and 700°C (and more specifically to about 672°C), the material in a raw state for making a vitreous sheet 3 ready to be moulded or pressed at a subsequent station, so that it may take the desired final configuration.

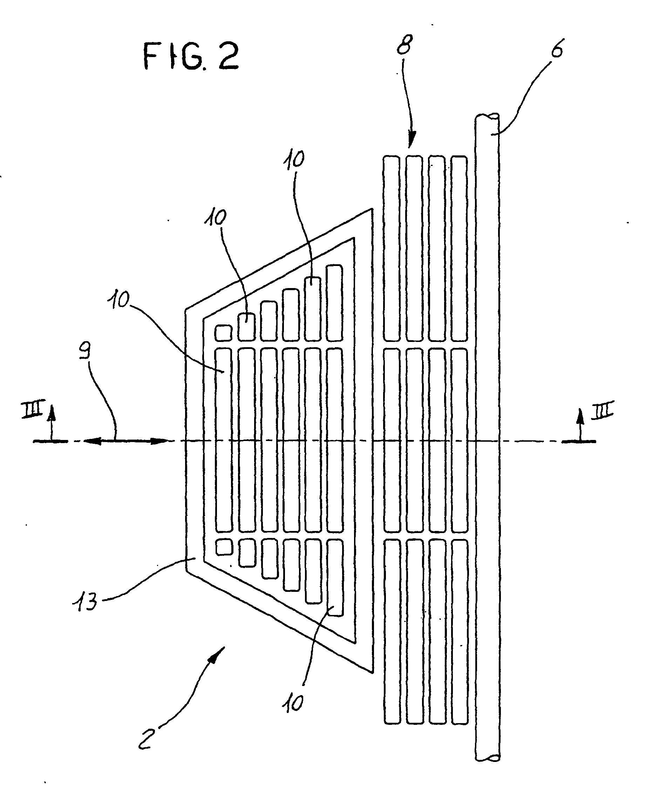

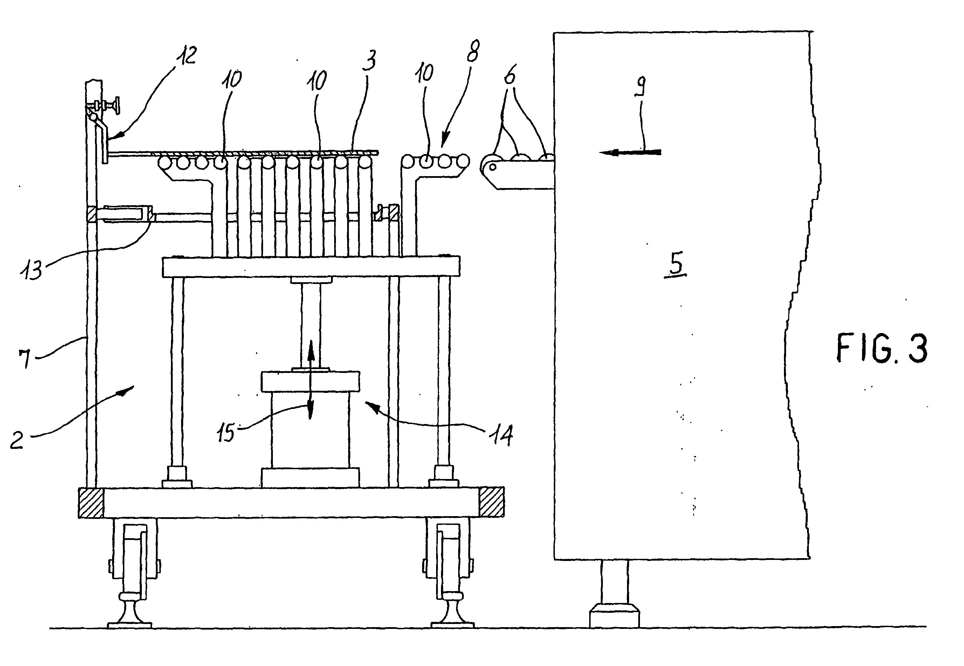

The obtained vitreous sheet 3 is moved from furnace 5, by means of rollers 6 for example, towards a moulding station 4 where the presence of a positioning device 2 of the type shown in Figs. 2 and 3 is provided.

Such a device 2 is made up of a support structure 7 supporting advancing or feeding means 8 capable of moving glass sheets 3 along a first forward direction 9. Preferably the feeding means 8 comprises a predetermined number of rollers 10 with a horizontal axis which are driven in rotation, also independently of each other, by appropriate motors (not shown). Practically, the feeding means 8 is adapted to move a sheet 3 away from furnace 5 until it reaches its correct positioning under a moulding element and afterwards towards an unloading station 11 along a first direction 9 which is substantially horizontal. Clearly, the feeding means 8 may also consist of conveyor belts or a combination of suitably-disposed belts and rollers so as to move sheet 3 in the first direction 9.

Once sheet 3 from furnace 5 has reached its correct position on the positioning device 2, when it abuts for example against adjustable abutments 12 provided in the plant structure and capable of sensing the presence of said sheet and stopping motion of the motors of rollers 10, the sheet 3 itself is exactly disposed under a moulding element, generally a male die, adapted to give it the desired configuration.

The positioning device further has a perimetric support element or frame 13 carried by the support structure 7 and arranged to cooperate with the moulding element during glass shaping.

Through actuator means 14, the feeding means 8 and perimetric element 13 are moved relative to each other along a second direction 15 transverse to the first direction. Practically, the actuator means 14 causes lowering of (and more particularly it can alternately move up and down) the feeding means 8 relative to the perimetric element 13 along the second direction 15, thereby generating a moving-apart motion from the moulding element (in more detail generating a moving-close and moving-apart motion relative to the moulding element), whereas the perimetric element 13 rigidly connected to the support structure 7 is fixed. During this step, sheet 3 resting on rollers 10 lowers until it abuts on the perimetric element 13 supporting it during the subsequent lowering step of the moulding element. The last-mentioned element comes into contact with the glass giving it the desired configuration and then moves away leaving the moulded panel still resting on the perimetric support element 13.

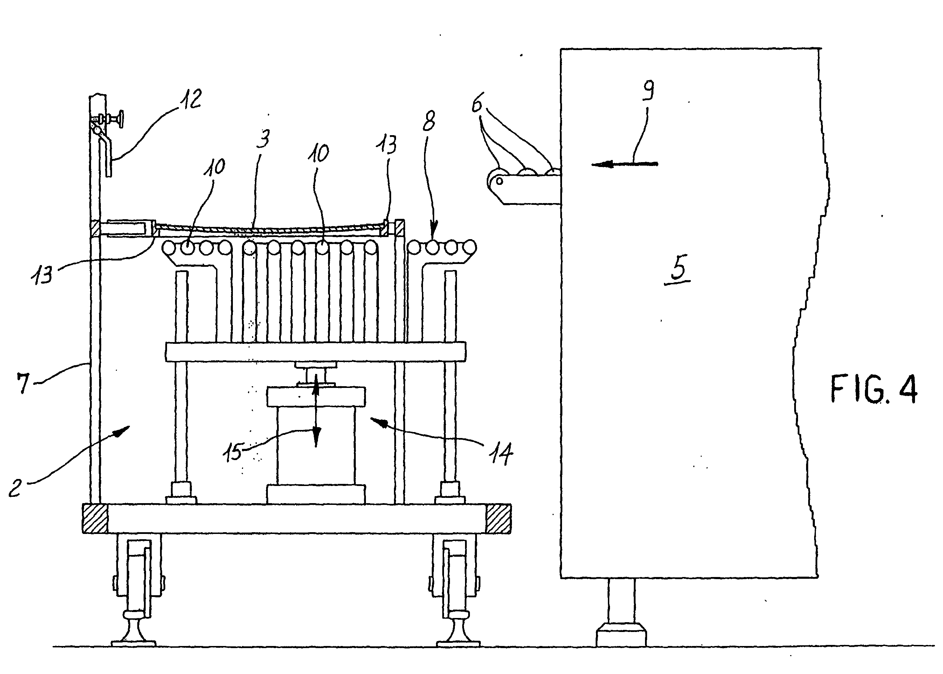

In more detail it is to note that the perimetric element 13 is fixedly and integrally connected with the support structure 7 and only moves therewith; unlike the above, the feeding means 8 can be moved, upon the action of the actuator means 14, in a preferably vertical direction 15 between at least one first operating position in which it supports and can move sheet 3 in the first direction 9 (Fig. 3) and a second operating position in which it is moved away from the sheet which in this case is supported by the perimetric support element 13 (Fig. 4). It is to note that the actuator means is capable of coordinating the descent movement of the moulding die with translation from the first to the second operating position of the feeding means 8. In this way the vitreous sheet 3 is supported by frame 13 while it is still in a plastic state and it is not shifted in any direction. Moving away of the feeding means 8 from sheet 3 enables cooperation of frame 13 with the moulding element to occur without any interference between the different parts of the device.

As regards the perimetric element or frame 13, obviously the shape of same matches the perimetric edge 3a of sheet 3 and is advantageously defined by a continuous frame. In the first operating condition of the feeding means 8 the driving rollers 10 are at least at the inside of the continuous frame 13 matching the shape of edge 3a of the sheet (Fig. 2) and support the sheet itself. Generally, since frame 13 follows the outline of the sheet to be moulded which is usually already the final outline of the glass panel, rollers 10 operating at the frame require to be suitably shaped during the preparation step of the positioning device 2 so that they may not interfere with the frame itself.

As viewed from Fig. 3, during the sheet advancing, frame 13 does not interfere either with the roller motion or with the feeding motion of the sheet itself.

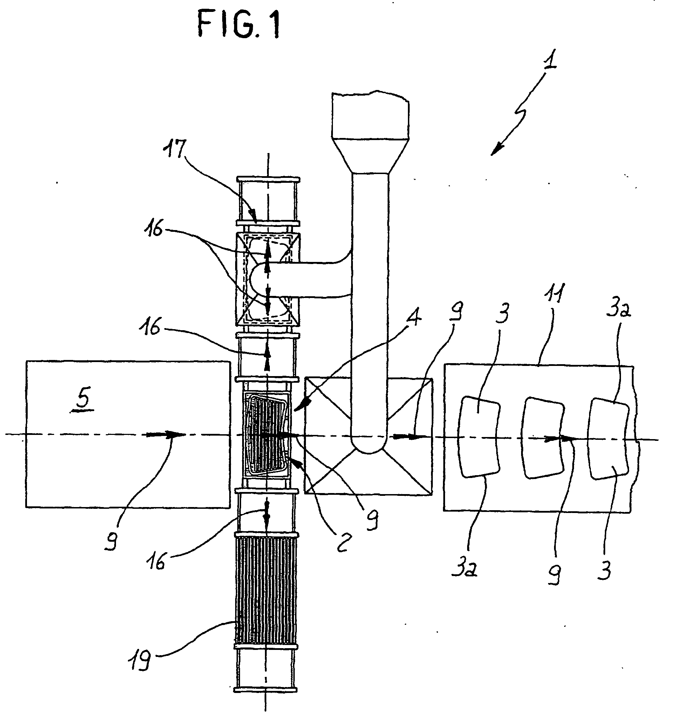

The whole positioning device 2 is then movable at least along a third, preferably horizontal, shifting direction 16 (Fig. 1), while trailing along both the feeding means 8 and the perimetric element 13. The third shifting direction 16 is generally transverse to the first direction and more particularly it is orthogonal thereto. Along the third shifting direction 16 the support structure 7 is movable on a rail between the moulding station 4 at which the moulding element gives the sheet the desired configuration and a tempering station 17 at which the sheet is tempered. At the tempering station 17 the moulded sheet is submitted to a thermal treatment for cooling, by air for example which is blown on both the opposite glass surfaces.

Once this process has been completed, the glass has taken the correct mechanical features and the positioning device 2 is brought back to the moulding station 4, still moving along the third direction 16.

Under this situation the feeding means 8 passes from the second to the first operating positions and carries out removal or drawing of the vitreous sheet 3 from the perimetric element 13 without any possibility of damaging the product because it is no longer in a plastic state. In fact the actuator means 14 causes rollers 10 to move upwardly again so that it may once more constitute a support for the tempered sheet 3 lifting it and releasing it from the perimetric support element 13.

The feeding means 8 (consisting of rollers in the figures) is again driven in rotation and transfers the sheet along the first direction towards a cooling station 18.

It is to point out that shifting of the feeding means 8 from the second to the first condition can only take place subsequently to sheet tempering, otherwise damage of the glass panel by deformation would occur.

In the present plant it is provided that the feeding means 8 should be shifted in this vertical-lifting direction only at the moulding station 4.

In the cooling station 18 temperature of the tempered sheet is decreased by adopting times, rates and temperature decreases essentially depending on the geometric nature and sizes of the sheets being produced. Sheets from the cooling station are then transported, still by means of rollers for example, to an unloading station 11.

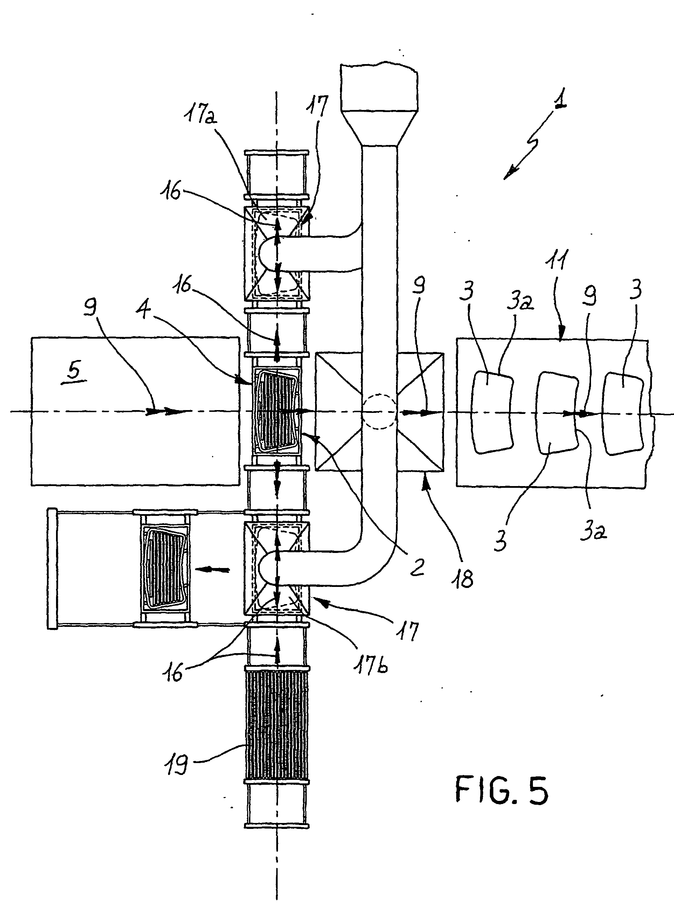

According to the plant structure, the furnace 5, tempering station 17 and cooling station 18 are placed close to the moulding station 4 (see Figs. 1, 4 and 5). In more detail, at least one tempering station (Figs. 1 and 5), but more preferably two tempering stations (see Fig. 4) are present and they are located laterally of the moulding station 4 relative to the first direction 9.

In the first plant shown (Fig. 1) the first shifting direction 9 of sheet 3 is coincident with the sheet feeding direction from furnace 5 to the moulding station 4 and from the moulding station 4 to the cooling station 18, whereas the third shifting direction 16 of the device, orthogonal to the preceding one, is coincident with the shifting direction of the positioning device 2 from the moulding station 4 to the tempering station 17.

In operation it is therefore provided for the vitreous sheet 3 coming out of furnace 5 to be correctly and accurately positioned at the moulding station 4. As rollers 10 lower, sheet 3 lies on frame 13 and is simultaneously moulded due to the descent of the pressing male die. Under this condition (i.e. with the feeding means 8 lowered and the moulded glass sheet 3 supported by frame 13) the positioning device 2 is transported on a rail to the tempering station 17. While always keeping the same condition, once tempering has been carried out, the positioning device is brought back to the moulding station 4 and sheet 3 is drawn, due to passage from the second to the first conditions of the feeding means 8. Said feeding means 8 then carries out transfer of the sheet to the cooling station 18 and subsequently to the unloading station 11.

It is also apparent that in this solution providing a single tempering station, the presence of a further positioning device 19 may be contemplated (on the opposite side from said tempering station relative to the moulding station), which further positioning device can be either of known type or in accordance with the present invention, for the purpose of replacing trolley 2 in use in case of failures or for necessary servicing.

Should two tempering stations 17 be present (see Fig. 4), the production rate of the plant, can be further increased. In fact the production plant itself can be provided with two positioning devices. After the first sheet has been moulded, the same is transferred to the first tempering station 17a, a second trolley is placed in the moulding station 4 and a second sheet is positioned therein and then moulded. After tempering of the first sheet has been completed, the first trolley is brought back to the moulding station 4 while the second trolley is brought to the second tempering station 17b. In the moulding station 4 the first sheet is drawn, then it is transported to a cooling station 18, a third sheet from the furnace is loaded, moulded and then transferred to the first tempering station 17a. Simultaneously, the second sheet terminates the tempering operation in the second tempering station 17b and is brought back to the moulding station 4 where it can be unloaded and sent to the cooling station 18. In this way the plant is capable of simultaneously performing several operations on different sheets being manufactured.

In a different embodiment (Fig. 5) the plant for manufacturing glass panels can provide a moulding station 4 placed immediately at the outlet of furnace 5 and followed by a tempering station 17 located immediately downstream of the moulding station 4 along the feeding line of the glass sheet (first direction 9). Laterally of the moulding station 4, provision will be made for two cooling stations 18 to which sheet 3 once tempered and drawn from the die will be sent for prosecution of the thermal treatment. In each of these cooling stations moving forward of the sheet towards an unloading station 11, where the finished goods are collected, is provided, as well as cooling of the same sheet by means of appropriate air blowers.

After the above description, the process for manufacturing glass panels 3 in plants of the above described type comprises the steps of positioning and moulding the vitreous sheet at a moulding station 4. The moulded sheet 3 is then transferred to and tempered in a tempering station 17; the same is then expelled and sent to the cooling station 18 to be then transported to the unloading station 11. Transferring of sheet 3 from the moulding station 4 to the tempering station 17 takes place along the third direction 16 transverse to the first direction 9 for transferring the sheet from the moulding station 4 to the cooling station 18.

It is also to note that the drawing step is carried out in the same station 4 at which the moulding step takes place and that it is the drawn sheet that is sent to the cooling station 18 and unloading station 11.

The invention achieves important advantages.

A plant thus conceived first enables both the ejector and the movable support structure to be eliminated, which will make the plant taken as a whole structurally simpler and much more compact. Elimination of the movable support structure enables, on the one hand, the longitudinal extension of the whole plant to be shortened (the plant will become even more than four metres shorter than the plants of known type) and consequently enables the tempering station and cooling station to be disposed at closely spaced-apart positions, which will allow a better thermal control of the material during manufacturing. On the other hand, the structure as a whole is made lighter and the production rates can be greatly increased as they are no longer connected with the speed of the movable structure itself.

Furthermore, the positioning device in accordance with the invention, in addition to enabling accomplishment of the moulding operations, also carries out drawing of the sheet, which will eliminate the presence of an ejector which is always present in common plants for glass panel manufacture.

In its most specific aspects, the particular relative positioning between the different working stations enables the production cycle rates to be increased by a percent value higher than 100%.

## Claims

1. A positioning device for a vitreous sheet (3) at a moulding station (4) provided in plants (1) for manufacturing glass panels, comprising:
- a support structure (7);
- feeding means (8) for moving the sheet forward in a first direction (9) and carried by the support structure (7);
- a perimetric support (13) carried by the support structure (7) and arranged to cooperate with an upper moulding element to give the sheet (3) the desired configuration; and
- actuator means (14) for moving said feeding means (8) relativ to the perimetric support (13) relative to each other along a second direction (15) transverse to the first direction;
**characterized in that** said perimetric support (13) is fixedly and integrally connected with the support structure (7), the vitreous sheet (3) being supported by the perimetric support (13) and not being shifted in any direction while it is still in a plastic state.

2. A positioning device as claimed in claim 1, **characterized in that** the feeding means (8) comprises power-driven rollers (10) and/or power-driven conveyor belts for transporting the sheet away from.a furnace (5) towards an unloading station (11) along the first, substantially horizontal, direction (9).

3. A positioning device as claimed in anyone of the preceding claims, **characterized in that** the actuator means (14) causes a reciprocating up and down movement of the feeding means (8) relative to the perimetric element (13) along said second direction (15), thereby generating a moving-close and moving-apart motion relative to the moulding element, said second direction (15) being preferably vertical.

4. A positioning device as claimed in anyone of the preceding claims, **characterized in that** the perimetric support (13) comprises at least one continuous frame the shape of which matches that of a perimetric edge (3a) of the sheet.

5. A positioning device as claimed in anyone- of the preceding claims **characterized in that** the feeding means (8) is shiftable upon the action of the actuator means (14) between at least one first operating position in which it supports and can transport the sheet (3) in the first direction and a second operating position in which it is moved away from the sheet, said perimetric support element (13) supporting the sheet when the feeding means (8) is in the second operating position, the feeding means (8) when passing from the second to the first operating positions carrying out removal or drawing of the glass sheet (3) from the perimetric support (13), the feeding means (8) transporting the sheet after drawing, along said first direction (9).

6. A positioning device as claimed in claim 5, **characterized in that** the feeding means (8) is shiftable from the first to the second operating positions and from the second to the first operating positions exclusively at the moulding station (4).

7. A positioning device as claimed in claim 5, **characterized in that** in the first operating position of the feeding means (8) the power-driven rollers (10) are at least at the inside of the continuous frame (13) the shape of which matches that of the edge (3a) of the sheet (3) and support said sheet.

8. A positioning device as claimed in anyone of the preceding claims, **characterized in that** the support structure (7) is movable on a rail at least along a third, preferably horizontal, shifting direction (16), said feeding means (8) and perimetric support (13) being movable integrally with the support structure (7) along said shifting direction (16).

9. A positioning device as claimed in claim 8, **characterized in that** said third shifting direction (16) is transverse to the first direction (9) and preferably orthogonal thereto.

10. A positioning device as claimed in anyone of the preceding claims, **characterized in that** the support structure (7) is movable at least between the moulding station (4) in which the moulding element gives the sheet (3) the desired configuration and a tempering station (17) in which said sheet is tempered.

11. A plant for manufacturing glass panels comprising:
- a furnace (5) to manufacture vitreous sheets (3);
- a positioning device (2) operatively acting between the furnace (5) and the moulding station (4);
- a moulding station (4) to give the vitreous sheet the desired configuration;
- a tempering station (17) to give the moulded sheet the desired mechanical features;
- a cooling station (18) to decrease the temperature of the tempered sheet;
**characterized in that** said positioning device (2) is of the type in accordance with anyone of the preceding claims 1-10, the furnace (5), the tempering station (17) and the cooling station (18) being at positions close to the moulding station (4).

12. A plant as claimed in claim 11, **characterized in that** the moulding station (4) at which the moulding element gives the sheet (3) the desired configuration is coincident with a pulling-out or drawing station at which the sheet is removed from the perimetric support (13).

13. A plant as claimed in claims 11 or 12, **characterized in that** it comprises at least one and preferably two tempering stations (17) placed laterally of the moulding station (4) with respect to the first direction (9), said first direction (9) lying from the furnace (5) to the unloading station (11).

14. A plant as claimed in claim 13, **characterized in that** the cooling station (18) is placed after the drawing station along the first direction (9).

15. A plant as claimed in claim 13, **characterized in that** the vitreous sheet (3) moves forward from the furnace to the moulding station along a first direction (9), the plant comprising at least one and preferably two cooling stations (18) placed laterally of the moulding station (4) with respect to the first direction (9).

## Patentansprüche

1. Vorrichtung zur Positionierung von Glasscheiben (3) in einer Formstation (4) in Anlagen zur Herstellung von Glasplatten, umfassend:
- einen Tragaufbau (7);
- vom Tragaufbau (7) getragene Vorschubmittel (8) der Glasscheibe in einer ersten Richtung (9);
- einen vom Tragaufbau (7) getragenen Außenhalter (13), der bereitgestellt ist, mit einem oberen Formelement zusammenzuwirken, um der Glasscheibe (3) die gewünschte Ausbildung zu erteilen; und
- Stellantriebe (14), um die Vorschubmittel gegenüber dem Außenhalter (13) längs einer zur ersten Richtung querliegenden Richtung (15) zu bewegen;
**dadurch gekennzeichnet, dass** der Außenhalter (13) mit dem Tragaufbau (7) starr und fest verbunden ist, wobei die Glasscheibe (3) vom Außenhalter (13) getragen und in keiner Richtung verschoben wird, während sie sich noch im plastischen Zustand befindet.

2. Vorrichtung zum Positionieren nach Anspruch 1, **dadurch gekennzeichnet, dass** die Vorschubmittel (8) Antriebsrollen (10) und/oder angetriebene Bänder umfassen, um die Glasscheibe von einem Ofen (5) weg in Richtung einer Entladestation (11) längs der ersten, im wesentlichen horizontalen Richtung (9) zu bewegen.

3. Vorrichtung zum Positionieren nach einem beliebigen der vorstehenden Ansprüche, **dadurch gekennzeichnet, dass** die Stellantriebe (14) die Vorschubmittel (8) gegenüber dem Außenhalter (13) längs der zweiten Richtung (15) auf und ab bewegen, wobei so eine Bewegung vom Formelement weg und hin erzeugt wird, wobei die zweite Richtung (15) bevorzugt vertikal ist.

4. Vorrichtung zum Positionieren nach einem beliebigen der vorstehenden Ansprüche, **dadurch gekennzeichnet, dass** der Außenhalter (13) mindestens einen durchgehenden Rahmen umfasst, der zu einem Außenrand (3a) der Glasscheibe gegenprofiliert ist.

5. Vorrichtung zum Positionieren nach einem beliebigen der vorstehenden Ansprüche, **dadurch gekennzeichnet, dass** die Vorschubmittel (8) durch Einwirkung der Stellantriebe (14) zwischen mindestens einer Arbeitsstellung, in der sie die Glasscheibe (3) in der ersten Richtung stützen und bewegen können, und einer zweite Arbeitsstellung versetzbar sind, in der sie von der Glasscheibe beabstandet sind, wobei der Außenhalter (13) die Glasscheibe abstützt, sobald die Vorschubmittel (8) sich in der zweiten Arbeitsstellung befinden, wobei die Vorschubmittel (8) beim Übergang von der zweiten auf die erste Arbeitsstellung für die Entfernung oder den Auszug der Glasscheibe (3) aus dem Außenhalter (13) vorsehen, wobei die Vorschubmittel (8) die Glasscheibe nach dem Auszug längs der ersten Richtung (9) bewegen.

6. Vorrichtung zum Positionieren nach Anspruch 5, **dadurch gekennzeichnet, dass** die Vorschubmittel (8) von der ersten in die zweite Arbeitsstellung und von der zweiten in die erste Arbeitsstellung ausschließlich in der Formstation (4) verstellbar sind.

7. Vorrichtung zum Positionieren nach Anspruch 5, **dadurch gekennzeichnet, dass** in der ersten Arbeitsstellung der Vorschubmittel (8) die Antriebsrollen (10) sich mindestens innerhalb des durchgehenden, zum Rand (3a) der Glasscheibe (3) gegenprofilierten Rahmens befinden und die Glasscheibe abstützen.

8. Vorrichtung zum Positionieren nach einem beliebigen der vorstehenden Ansprüche, **dadurch gekennzeichnet, dass** der Tragaufbau (7) auf Schienen längs einer dritten, bevorzugter Weise horizontalen Verstellrichtung (16) beweglich ist, wobei die Vorschubmittel (8) und der Außenhalter (13) am Tragaufbau (7) festliegend längs der Verstellrichtung (16) beweglich sind.

9. Vorrichtung zum Positionieren nach Anspruch 8, **dadurch gekennzeichnet, dass** die dritte Verstellrichtung (16) zur ersten Richtung (9) quer liegt und bevorzugter Weise senkrecht ist.

10. Vorrichtung zum Positionieren nach einem beliebigen der vorstehenden Ansprüche, **dadurch gekennzeichnet, dass** der Tragaufbau (7) mindestens zwischen der Formstation (4), in der das Formelement der Glasscheibe (3) die gewünschte Ausbildung erteilt und einer Härtestation (17) beweglich ist, in der die Glasscheibe gehärtet wird.

11. Anlage zur Herstellung von Glasplatten, umfassend:
- einen Ofen (5) zur Herstellung von Glasscheiben (3);
- eine Vorrichtung zur Positionierung (2), die zwischen dem Ofen (5) und der Formstation (4) wirksam wirkt;
- eine Formstation (4), um der Glasscheibe die gewünschte Ausbildung zu erteilen;
- eine Härtestation (17), um der gebildeten Glasscheibe die gewünschten mechanischen Merkmale zu erteilen;
- eine Abkühlstation (18), um die Temperatur der gehärteten Glasscheibe zu reduzieren;
**dadurch gekennzeichnet, dass** die Vorrichtung zur Positionierung (2) nach der Art gemäß einem beliebigen der vorstehenden Ansprüche 1-10 ist, wobei der Ofen (5) die Härtestation (17) und die Abkühlstation (18) sich in zur Formstation (4) anliegenden Positionen befindet.

12. Anlage nach Anspruch 11, **dadurch gekennzeichnet, dass** die Formstation (4), in der das Formelement der Glasscheibe (3) die gewünschte Ausbildung erteilt, mit der Station zum Entfernen oder Ausziehen zusammenfällt, in der die Glasplatte vom Außenhalter (13) abgenommen wird.

13. Anlage nach Anspruch 11 oder 12, **dadurch gekennzeichnet, dass** sie mindestens eine und bevorzugter Weise zwei Härtestationen (17) umfasst, die seitlich zur Formstation (4) gegenüber der ersten Richtung (9) angeordnet sind, wobei die erste Richtung (9) sich vom Ofen (5) zur Entladestation (11) erstreckt.

14. Anlage nach Anspruch 13, **dadurch gekennzeichnet, dass** die Abkühlstation (18) nach der Auszugstation längs der ersten Richtung (9) angeordnet ist.

15. Anlage nach Anspruch 13, **dadurch gekennzeichnet, dass** die Glasscheibe (3) vom Ofen zur Formstation längs einer ersten Richtung (9) vorrückt, wobei die Anlage mindestens eine und bevorzugter Weise zwei Abkühlstationen (18) umfasst, die deutlich zur Formstation (4) gegenüber der ersten Richtung (9) angeordnet sind.

## Revendications

1. Appareil de positionnement de feuilles en verre (3) en relation d'une station de formage (4) dans des usines (1) de fabrication de panneaux en verre, comprenant:
- une structure support (7);
- des moyens d'avancement (8) pour avancer la feuille dans une première direction (9) et portés par la structure support (7);
- un support périmétrique (13) porté par la structure support (7) et aménagé pour coopérer avec un élément de formage supérieur destiné à donner à la feuille (3) la configuration désirée; et
- des moyens d'entraînement (14) pour déplacer les uns par rapport aux autres lesdits moyens d'avancement (8) par rapport au support périmétrique (13) le long d'une deuxième direction (15) transversale à la première direction;
**caractérisé en ce que** ledit support périmétrique (13) est relié fixement et solidairement à la structure support (7), la feuille en verre (3) étant supportée par le support périmétrique (13) et n'étant déplacé en aucune direction pendant qu'elle se trouve encore à l'état plastique.

2. Appareil de positionnement selon la revendication 1, **caractérisé en ce que** les moyens d'avancement (8) comportent des rouleaux motorisés (10) et/ou des courroies transporteuses motorisées pour transporter la feuille loin du four (5) vers une station de déchargement (11) le long de la première direction (9) sensiblement horizontale.

3. Appareil de positionnement selon l'une quelconque des revendications précédentes, **caractérisé en ce que** les moyens d'entraînement (14) causent un mouvement en va-et-vient vers le haut et vers le bas des moyens d'avancement (8) par rapport au support périmétrique (13) le long de ladite deuxième direction (15), engendrant ainsi un mouvement de rapprochement et d'éloignement par rapport à l'élément de formage, ladite deuxième direction (15) étant de préférence verticale.

4. Appareil de positionnement selon l'une quelconque des revendications précédentes, **caractérisé en ce que** le support périmétrique (13) comporte au moins un cadre continu épousant la forme du bord périmétrique (3a) de la feuille.

5. Appareil de positionnement selon l'une quelconque des revendications précédentes, **caractérisé en ce que** les moyens d'avancement (8) sont déplaçables par l'action des moyens d'entraînement (14) entre au moins une première position de travail à laquelle ils soutiennent et peuvent transporter la feuille (3) dans la première direction et une deuxième position de travail à laquelle ils sont éloignés de la feuille, ledit support périmétrique (13) soutenant la feuille quand les moyens d'avancement (8) sont dans la deuxième position de travail, les moyens d'avancement (8) quand ils passent de la deuxième à la première position de travail effectuant l'enlèvement et l'extraction de la feuille en verre (3) du support périmétrique (13), les moyens d'avancement (8) transportant la feuille après l'extraction, le long de ladite première direction (9).

6. Appareil de positionnement selon la revendication 5, **caractérisé en ce que** les moyens d'avancement (8) sont déplaçables de la première à la deuxième position de travail et de la deuxième à la première position de travail exclusivement à la station de formage (4).

7. Appareil de positionnement selon la revendication 5, **caractérisé en ce que** dans la première position de travail des moyens d'avancement (8) les rouleaux motorisés (10) sont au moins à l'intérieur du cadre continu (13) dont la forme épouse celle du bord (3a) de la feuille (3) et ils soutiennent ladite feuille.

8. Appareil de positionnement selon l'une quelconque des revendications précédentes, **caractérisé en ce que** la structure support (7) est mobile sur un rail au moins le long d'une troisième direction de déplacement (16), de préférence horizontale, lesdits moyens d'avancement (8) et ledit support périmétrique (13) étant mobiles solidairement avec la structure support (7) le long de ladite direction de déplacement (16).

9. Appareil de positionnement selon la revendication 8, **caractérisé en ce que** ladite troisième direction de déplacement (16) est transversale à la première direction (9) et de préférence perpendiculaire à cette dernière.

10. Appareil de positionnement selon l'une quelconque des revendications précédentes, **caractérisé en ce que** la structure support (7) est mobile au moins entre la station de formage (4), où l'élément de formage donne à la feuille (3) la configuration désirée, et une station de trempe (17) où ladite feuille est trempée.

11. Usine de fabrication de panneaux en verre, comprenant:
- un four (5) pour fabriquer des feuilles en verre (3);
- un appareil de positionnement (2) agissant de manière opérante entre le four (5) et la station de formage (4);
- une station de formage (4) pour donner à la feuille en verre la configuration désirée;
- une station de trempe (17) pour donner à la feuille formée les caractéristiques mécaniques désirées;
- une station de refroidissement (18) pour réduire la température de la feuille trempée;
**caractérisée en ce que** ledit appareil de positionnement (2) est du type selon l'une quelconque des revendications précédentes 1-10; le four (5), la station de trempe (17) et la station de refroidissement (18) étant à des positions proches de la station de formage (4).

12. Usine selon la revendication 11, **caractérisée en ce que** la station de formage (4) où l'élément de formage donne à la feuille (3) la configuration désirée est coïncidente avec une station d'enlèvement ou extraction où la feuille est enlevée du support périmétrique (13).

13. Usine selon la revendication 11 ou 12, **caractérisée en ce qu'**elle comporte au moins une et de préférence deux stations de trempe (17) placées latéralement à la station de formage (4) par rapport à la première direction (9), ladite première direction (9) s'étendant du four (5) à la station de déchargement (11).

14. Usine selon la revendication 13, **caractérisée en ce que** la station de refroidissement (18) est placée après la station d'extraction le long de la première direction (9).

15. Usine selon la revendication 13, **caractérisée en ce que** la feuille en verre (3) avance du four à la station de formage le long d'une première direction (9), l'usine comprenant au moins une et de préférence deux stations de refroidissement (18) placées latéralement à la station de formage (4) par rapport à la première direction (9).
